# EUROPEAN PATENT APPLICATION

(11) **EP 4 564 170 A2**
(43) Date of publication of application: **04.06.2025**
(21) Application number: 25171247.7
(22) Date of filing: 17.04.2025
(51) Int. Cl.: G06F 9/50, G06F 11/14

(54) **REDUNDANT PERCEPTION METHOD AND APPARATUS, ELECTRONIC DEVICE, AND STORAGE MEDIUM**

(30) Priority: 19.04.2024 CN 202410480573
(71) Applicant: Beijing Horizon Information Technology Co., Ltd., Beijing 100094 (CN)
(72) Inventor: QIAN, Jie, Beijing, 100094 (CN); LIU, Jingchu, Beijing, 100094 (CN); YANG, Hu, Beijing, 100094 (CN); CHEN, Ke, Beijing, 100094 (CN); ZENG, Jin, Beijing, 100094 (CN); RONG, Qin, Beijing, 100094 (CN)
(74) Representative: Dehns Germany Partnerschaft mbB

(57) **Abstract**

Embodiments of the present disclosure disclose a redundant perception method and apparatus, an electronic device, and a storage medium. The method includes: determining a first perception result based on a first perception application in a first perception functional cluster, where the first perception result includes a first minimum perception result, and the first minimum perception result is a perception result within a first preset minimum viewing-angle range; and determining a second perception result based on a second perception application in a second perception functional cluster, where the second perception result includes at least a second minimum perception result, software isolation and/or hardware isolation are implemented between the first perception application in the first perception functional cluster and at least a target second perception application, and the target second perception application represents a second perception application, for acquiring the second minimum perception result, in the second perception functional cluster.

## Description

### TECHNICAL FIELD

The present disclosure relates to assisted driving technologies, and in particular, to a redundant perception method and apparatus, an electronic device, and a storage medium.

### BACKGROUND

In scenarios such as autonomous driving and assisted driving, when a malfunction occurs in a perception system of a driving control system of a vehicle or a normal perception function fails to operate, if a driver cannot take over timely, it is needed for the perception system to provide the driving control system of the vehicle with a minimum perception result required for a minimum risk strategy, such as providing a perception result of a front road environment for the vehicle to stop in a current lane, to allow the vehicle to continue running in a controlled manner until stopping, thereby avoiding an accident such as veering out of the lane, a collision, or a rollover. In the related art, a redundant perception system is typically constructed by using multiple separate electronic control units (ECUs). However, the use of the multiple separate ECUs tends to limit utilization efficiency of hardware resources of the ECUs.

### SUMMARY

To resolve a technical problem such as low hardware resource utilization efficiency of an ECU, embodiments of the present disclosure provide a redundant perception method and apparatus, an electronic device, and a storage medium, to improve hardware resource utilization efficiency.

According to a first aspect of the present disclosure, there is provided a redundant perception method, including: determining a first perception result based on a first perception application in a first perception functional cluster, where the first perception result includes a first minimum perception result, and the first minimum perception result is a perception result within a first preset minimum viewing-angle range; and determining a second perception result based on a second perception application in a second perception functional cluster, where the second perception result includes at least a second minimum perception result, and the second minimum perception result is a perception result within a second preset minimum viewing-angle range, where software isolation and/or hardware isolation are implemented between the first perception application in the first perception functional cluster and at least a target second perception application, and the target second perception application represents a second perception application, for acquiring the second minimum perception result, in the second perception functional cluster.

According to a second aspect of the present disclosure, there is provided a redundant perception apparatus, including: a first processing module, configured for determining a first perception result based on a first perception application in a first perception functional cluster, where the first perception result includes a first minimum perception result, and the first minimum perception result is a perception result within a first preset minimum viewing-angle range; and a second processing module, configured for determining a second perception result based on a second perception application in a second perception functional cluster, where the second perception result includes at least a second minimum perception result, the second minimum perception result is a perception result within a second preset minimum viewing-angle range, software isolation and/or hardware isolation are implemented between the first perception application in the first perception functional cluster and at least a target second perception application, and the target second perception application represents a second perception application, for acquiring the second minimum perception result, in the second perception functional cluster.

According to a third aspect of the present disclosure, there is provided a computer-readable storage medium, where the storage medium stores a computer program, and the computer program, when executed by a processor, causes the processor to implement the redundant perception method described in any embodiment described above in the present disclosure.

According to a fourth aspect of the present disclosure, there is provided an electronic device, where the electronic device includes: a processor; and a memory configured for storing instructions executable by the processor, where the processor is configured for reading the executable instructions from the memory, and executing the instructions to implement the redundant perception method described in any embodiment described above in the present disclosure.

According to a fifth aspect of the present disclosure, there is provided a computer program product, where instructions in the computer program product, when executed by a processor, causes the processor to implement the redundant perception method provided in any embodiment described above in the present disclosure.

Based on the redundant perception method and apparatus, the electronic device, and the storage medium that are provided in the embodiments of the present disclosure, perception applications may be divided into two perception functional clusters. A first perception result is determined based on a first perception application in a first perception functional cluster, and a second perception result is determined based on a second perception application in a second perception functional cluster. Since the first perception result includes a first minimum perception result and the second perception result includes at least a second minimum perception result, the first perception application and a target second perception application in the second perception functional cluster both may provide a minimum perception result, forming redundant perception. In addition, the first perception application and the target second perception application are isolated by software and/or hardware, so that when one (for example, the first perception application) of both of them cannot provide a minimum perception result due to reasons such as a malfunction, normal operation of the other (for example, the target second perception application) of both of them is not affected, and the other may continue to provide a minimum perception result (for example, a perception result for a front road environment) for a vehicle to stop in a current lane, allowing the vehicle to continue running in a controlled manner until stopping, thereby avoiding an accident such as veering out of the lane, a collision, or a rollover and ensuring safety of driving the vehicle. On this basis, the first perception application and the target second perception application are isolated by software and/or hardware, so that the first perception functional cluster and the second perception functional cluster may be implemented by using hardware resources of a same ECU with an isolation function or a controller of a similar architecture, thereby improving utilization efficiency of hardware resources.

### BRIEF DESCRIPTION OF DRAWINGS

FIG. 1 illustrates an exemplary application scenario of a redundant perception method according to the present disclosure;
FIG. 2 is a schematic flowchart illustrating a redundant perception method according to an exemplary embodiment of the present disclosure;
FIG. 3 is a schematic flowchart illustrating a redundant perception method according to another exemplary embodiment of the present disclosure;
FIG. 4 is a schematic diagram illustrating software partitions according to an exemplary embodiment of the present disclosure;
FIG. 5 is a schematic diagram illustrating software partitions according to another exemplary embodiment of the present disclosure;
FIG. 6 is a schematic diagram illustrating software partitions according to still another exemplary embodiment of the present disclosure;
FIG. 7 is a schematic flowchart illustrating a redundant perception method according to still another exemplary embodiment of the present disclosure;
FIG. 8 is a schematic exemplary diagram illustrating a redundant perception system according to an exemplary embodiment of the present disclosure;
FIG. 9 is a schematic diagram illustrating software partitions and perception logic according to yet another exemplary embodiment of the present disclosure;
FIG. 10 is a schematic diagram illustrating a perception range of a first perception functional cluster according to an exemplary embodiment of the present disclosure;
FIG. 11 is a schematic diagram illustrating a perception range of a second perception functional cluster according to an exemplary embodiment of the present disclosure;
FIG. 12 is a schematic flowchart illustrating a redundant perception method according to yet another exemplary embodiment of the present disclosure;
FIG. 13 is a schematic flowchart illustrating a redundant perception method according to still yet another exemplary embodiment of the present disclosure;
FIG. 14 is a schematic diagram illustrating a principle for determining an availability status of a perception result according to an exemplary embodiment of the present disclosure;
FIG. 15 is a schematic diagram illustrating a principle for determining an availability status of a perception result according to another exemplary embodiment of the present disclosure;
FIG. 16 is a schematic diagram illustrating a structure of a redundant perception apparatus according to an exemplary embodiment of the present disclosure;
FIG. 17 is a schematic diagram illustrating a structure of a redundant perception apparatus according to another exemplary embodiment of the present disclosure;
FIG. 18 is a schematic diagram illustrating a structure of a redundant perception apparatus according to still another exemplary embodiment of the present disclosure;
FIG. 19 is a schematic diagram illustrating a structure of a redundant perception apparatus according to yet another exemplary embodiment of the present disclosure;
FIG. 20 is a schematic diagram illustrating a structure of a redundant perception apparatus according to still yet another exemplary embodiment of the present disclosure; and
FIG. 21 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Disclosure

In a process of implementing the present disclosure, the inventors have found that in scenarios such as autonomous driving and assisted driving, when a malfunction occurs in a perception system of a driving control system of a vehicle or a normal perception function fails to operate, if a driver cannot take over timely, it is needed for the perception system to additionally provide the driving control system of the vehicle with a minimum perception result required for a minimum risk strategy, such as providing a perception result for a front road environment for the vehicle to stop in a current lane, to allow the vehicle to continue running in a controlled manner until stopping, thereby avoiding an accident such as veering out of the lane, a collision, or a rollover. In the related art, a redundant perception system is typically constructed by using multiple separate ECUs. However, the use of the multiple separate ECUs tends to limit utilization efficiency of hardware resources of the ECUs and flexibility of software deployment.

### Exemplary Overview

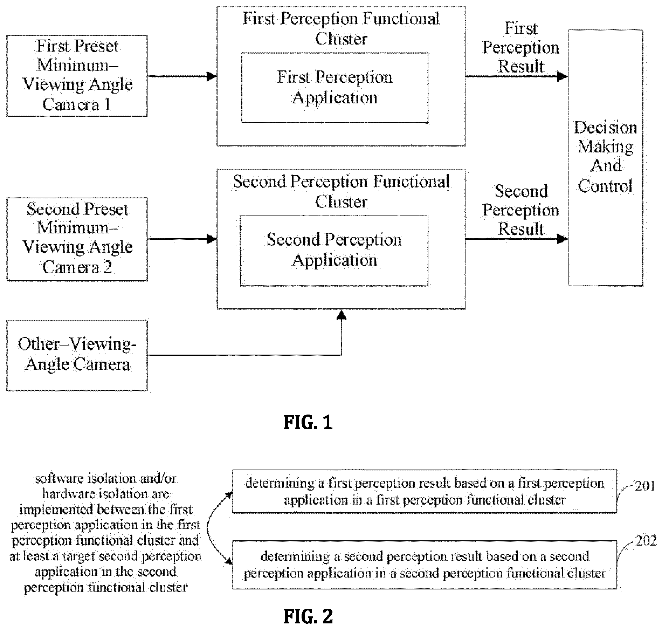

FIG. 1 illustrates an exemplary application scenario of a redundant perception method according to the present disclosure. As shown in FIG. 1, two perception functional clusters may be provided, which may include a first perception functional cluster and a second perception functional cluster. A first perception application in the first perception functional cluster may be configured for performing environmental perception based on an image captured by a first preset minimum-viewing angle camera 1. A second perception application in the second perception functional cluster may be configured for performing environmental perception based on an image captured by a second preset minimum-viewing angle camera 2 and an image captured by an other-viewing-angle camera. For example, the first preset minimum-viewing angle camera 1 may be a front-view camera 1, and the second preset minimum-viewing angle camera 2 may be a front-view camera 2. According to the redundant perception method of the present disclosure, a first perception result may be determined based on the first perception application in the first perception functional cluster. The first perception result includes a first minimum perception result, that is, a perception result within a first preset minimum viewing-angle range, for example, a perception result within a viewing-angle range of the front-view camera 1. A second perception result may be determined based on the second perception application in the second perception functional cluster. The second perception result includes at least a second minimum perception result, that is, a perception result within a second preset minimum viewing-angle range, for example, a perception result within a viewing-angle range of the front-view camera 2. For example, the second perception application includes a target second perception application, and the target second perception application represents a second perception application, for acquiring the second minimum perception result, in the second perception functional cluster. During actual application, the second perception result may further include a perception result within an other-viewing-angle range. For example, the second perception result may further include a perception result within a panoramic-view viewing-angle range, or a perception result within a rear-view viewing-angle range, and the like. Decision making and control may be performed based on the first perception result and the second perception result to control driving of a vehicle. Software isolation and/or hardware isolation are implemented between the first perception application in the first perception functional cluster and at least the target second perception application, to ensure that the first perception application and target second perception application do not affect each other. For example, if the first perception application cannot acquire the first minimum perception result due to reasons such as a malfunction of the first preset minimum-viewing angle camera 1 or an operational error in the first perception application, the acquisition of the second minimum perception result is not affected. Therefore, the first minimum perception result and the second minimum perception result serve as mutually redundant perception results, the first preset minimum-viewing angle camera 1 and the second preset minimum-viewing angle camera 2 serve as mutually redundant cameras, and the first perception application and the target second perception application serve as mutually perception applications, which form a redundant perception system, so that when one (for example, the first perception application) of both of them cannot provide a minimum perception result due to reasons such as a malfunction of corresponding software or hardware, normal operation of the other (for example, the target second perception application) of both of them is not affected, and the other may continue to provide a minimum perception result (for example, a perception result for a front road environment) for the vehicle to stop in a current lane, allowing the vehicle to continue running in a controlled manner until stopping, thereby avoiding an accident such as veering out of the lane, a collision, or a rollover and ensuring safety of driving the vehicle. On this basis, since the first perception application and the target second perception application are isolated by software and/or hardware, so that the first perception functional cluster and the second perception functional cluster may be implemented by using hardware resources of a same system on chip (SoC) or ECU with an isolation function or a controller of a similar architecture, thereby improving utilization efficiency of hardware resources and flexibility of software deployment.

### Exemplary Method

FIG. 2 is a schematic flowchart illustrating a redundant perception method according to an exemplary embodiment of the present disclosure. This embodiment may be applied to an electronic device, specifically, for example, an on-board computing platform. As shown in FIG. 2, the method in this embodiment of the present disclosure may include the following steps:
Step 201: determining a first perception result based on a first perception application in a first perception functional cluster.

The first perception result may include a first minimum perception result, and the first minimum perception result may be a perception result within a first preset minimum viewing-angle range.

In some optional embodiments, the first preset minimum viewing-angle range may be set according to a requirement of a vehicle for determining a minimum risk strategy. For example, the first preset minimum viewing-angle range may be a preset range of a front-view viewing angle.

In some optional embodiments, an image within the first preset minimum viewing-angle range may be captured by a first preset minimum viewing-angle camera, and then perception processing may be performed on the image within the first preset minimum viewing-angle range based on the first perception application in the first perception functional cluster to obtain a first perception result.

In some optional embodiments, the first perception application may include one or more perception applications. For example, the first perception application may include a first front-view perception application. Alternatively, the first perception application may include a first front-view perception application and a first post-processing application. The first front-view perception application may be configured for performing perception processing on sensor data (such as an image and/or radar point cloud data) within the first preset minimum viewing-angle range to obtain a first front-view perception result. The first post-processing application may be configured for performing post-processing on the first front-view perception result to obtain a first perception result. In this case, the first minimum perception result may be a perception result within a first front-view viewing-angle range.

In some optional embodiments, the first perception result may include status information of perceived static objects such as lane lines and road edges, and status information of dynamic objects such as surrounding vehicles, pedestrians, and cyclists. The status information of the static objects may include, for example, a lane line type, a lane line start point, a lane line end point, a lane line curve equation, a road edge type, a road edge start point, a road edge end point, a road edge curve equation, and the like. The status information of the dynamic objects may include, for example, classification, position, speed, acceleration, and other information of a dynamic object. During actual application, the status information of the dynamic objects may further include an information availability status, for example, a flag bit indicating a fault or unavailable information.

In some optional embodiments, a coverage range of the first minimum perception result may include a lateral range of an ego vehicle's lane, adjacent lanes (including, for example, a left lane and a right lane of the ego vehicle's lane), or secondary-adjacent lanes (that is, lanes adjacent to the adjacent lanes, for example, the secondary-adjacent lanes may include a left lane of the left lane of the ego vehicle's lane and a right lane of the right lane of the ego vehicle's lane), and a longitudinal range of a preset distance. A specific range may be set according to actual usage of the vehicle. For example, a perception range of the first minimum perception result may be determined according to a maximum driving speed of the vehicle, control performance of the vehicle, and the like.

Step 202: determining a second perception result based on a second perception application in a second perception functional cluster.

The second perception result may include at least a second minimum perception result, and the second minimum perception result may be a perception result with a second preset minimum viewing-angle range.

There are software isolation and/or hardware isolation between the first perception application in the first perception functional cluster and at least a target second perception application. The target second perception application may represent a second perception application, in the second perception functional cluster, for acquiring the second minimum perception result.

In some optional embodiments, the first perception functional cluster and the second perception functional cluster refer to two groups into which perception applications are logically divided. The first perception functional cluster serves as a minimum redundant perception functional cluster for the second perception functional cluster, that is, the first perception functional cluster may provide a minimum perception result (that is, the first minimum perception result), and the second perception functional cluster may also provide a minimum perception result (that is, the second minimum perception result), to implement minimum redundant perception, thereby ensuring, at minimum costs, that a minimum perception result required for a minimum risk strategy for the vehicle may be provided.

In some optional embodiments, there may be one or more second perception applications in the second perception functional cluster. For example, the second perception functional cluster may include at least the target second perception application, and the target second perception application may be configured for acquiring the second minimum perception result. Specifically, the target second perception application may determine, based on sensor data from the second preset minimum viewing-angle range, a perception result from the second preset minimum viewing-angle range as the second minimum perception result. During actual application, in addition to the target second perception application, the second perception functional cluster may also include an other second perception application, for example, at least one other-viewing-angle perception application. The other viewing angle may be set according to an actual requirement. For example, the other viewing angle may include a panoramic-view viewing angle, a rear-view viewing angle, or a surround-view viewing angle, so that the second perception functional cluster may implement a large range of perception around the ego vehicle and obtain a second perception result.

In some optional embodiments, the target second perception application may include a second front-view perception application. Alternatively, the target second perception application may include a second front-view perception application and a second post-processing application.

In some optional embodiments, there may be a particular data dependency relationship between first perception applications in the first perception functional cluster. There may be a particular data dependency relationship between second perception applications in the second perception functional cluster. There may be a particular data dependency relationship between the first perception application and the second perception application. Specifically, a data dependency relationship between perception applications (which may be referred to as applications for short) may be set according to functions of the perception applications.

In some optional embodiments, the isolation between the first perception application and the target second perception application may be implemented through software isolation, hardware isolation, or a combination of the software isolation and the hardware isolation, to ensure that the first perception application and the target second perception application do not affect each other, so that at least one of the first minimum perception result and the second minimum perception result may be acquired. For example, when the first perception application cannot acquire an available first minimum perception result (for example, the first perception application cannot acquire the first minimum perception result or acquires an incorrect first minimum perception result due to a malfunction or another reason), the second minimum perception result acquired by the target second perception application may be used to provide a minimum risk strategy for driving of the vehicle, ensuring that the vehicle may be driven in a controlled state until stopping, thereby avoiding an accident such as veering out of the lane, a collision, or a rollover. Similarly, when the target second perception application cannot provide an available second minimum perception result (for example, the target second perception application cannot acquire the second minimum perception result or acquires an incorrect second minimum perception result due to a malfunction or another reason), the first minimum perception result acquired by the first perception application may be used to provide a minimum risk strategy for driving of the vehicle. Software isolation may refer to allocating shared resources such as processors, memory, and buses, through an operating system (OS), to applications to be isolated, so that none of the applications is affected by the other of the applications or affects the other of the applications during operation. Hardware isolation may refer to binding hardware resources to applications to be isolated, so that none of the applications is affected by the other of the applications or affects the other of the applications during operation. For example, in terms of the hardware isolation, memory may be managed by a memory management unit (MMU), and the applications to be isolated may be bound to different memory resources, to implement hardware isolation of the memory resources.

In some optional embodiments, the software isolation may be implemented through software partitioning or any other feasible manner. Software partitioning may refer to allocating different partitions of memory, through an OS, to applications to be isolated, for storing the applications, and different processor resources may be allocated to applications stored in different partitions, for running the applications, so that the applications to be isolated do not affect each other during operation.

In some optional embodiments, the hardware isolation may be implemented through hardware resource binding or other manners. Hardware resource binding may refer to binding corresponding hardware resources for applications to be isolated, to allow different applications to run on different bound hardware resources, so that the applications are independent of each other and do not affect each other.

In some optional embodiments, a perception function of the first perception functional cluster and a perception function of the second perception functional cluster are heterogeneous, that is, the first perception functional cluster and the second perception functional cluster meet at least one of the following: 1. parameters for perception algorithms being inconsistent; 2. input sources for the perception algorithms being inconsistent; and 3. architectures of the perception algorithms being inconsistent. Through heterogeneous configuration, simultaneous failure or abnormal operation of both of the perception functional clusters may be avoided. Parameters for perception algorithms being inconsistent may mean that specific parameters are different under the same architectures of the perception algorithms. For example, perception models with same network structures have different network parameters. Input sources for the perception algorithms being inconsistent means that sensor data input to the first perception functional cluster and the second perception functional cluster are data acquired by different sensors. For example, an input source of the first perception functional cluster is an image captured by a front-view camera 1. An input source of the second perception functional cluster includes an image captured by a front-view camera 2, and may also include an image captured by an other-viewing-angle camera. That architectures of the perception algorithms being inconsistent may mean that the first perception functional cluster and the second perception functional cluster use different perception algorithms, for example, different perception models.

In the embodiments of the present disclosure, a sensor for acquiring the input source is not limited to a camera, and may also include another type of sensor, such as lidar, millimeter wave radar, or ultrasonic radar, which is not specifically limited.

In some optional embodiments, the second preset minimum viewing-angle range and the first preset minimum viewing-angle range may be viewing-angle ranges of two sensors, for example, two front-view cameras, such as the front-view camera 1 and the front-view camera 2. The two sensors may have the same or different parameters. For example, the two front-view cameras may have the same or different fields of view (for example, 90 degrees and 120 degrees) and other parameters. Therefore, the second preset minimum viewing-angle range may be the same as or have a certain difference from the first preset minimum viewing-angle range.

It should be noted that there may be no sequential order for step 201 and step 202.

According to the redundant perception method provided in this embodiment, perception applications may be divided into two perception functional clusters. A first perception result is determined based on a first perception application in a first perception functional cluster, and a second perception result is determined based on a second perception application in a second perception functional cluster. Since the first perception result includes a first minimum perception result and the second perception result includes at least a second minimum perception result, the first perception application and a target second perception application in the second perception functional cluster both may provide a minimum perception result, forming redundant perception. In addition, the first perception application and the target second perception application are isolated by software and/or hardware, so that when one (for example, the first perception application) of both of them cannot provide a minimum perception result due to reasons such as a malfunction, normal operation of the other (for example, the target second perception application) of both of them is not affected, and the other may continue to provide a minimum perception result (for example, a perception result for a front road environment) for a vehicle to stop in a current lane, allowing the vehicle to continue running in a controlled manner until stopping, thereby avoiding an accident such as veering out of the lane, a collision, or a rollover and ensuring safety of driving the vehicle. On this basis, the first perception application and the target second perception application are isolated by software and/or hardware, so that the first perception functional cluster and the second perception functional cluster may be implemented by using hardware resources of a same SoC or ECU with an isolation function or a controller of a similar architecture, thereby improving utilization efficiency of hardware resources and flexibility of software deployment.

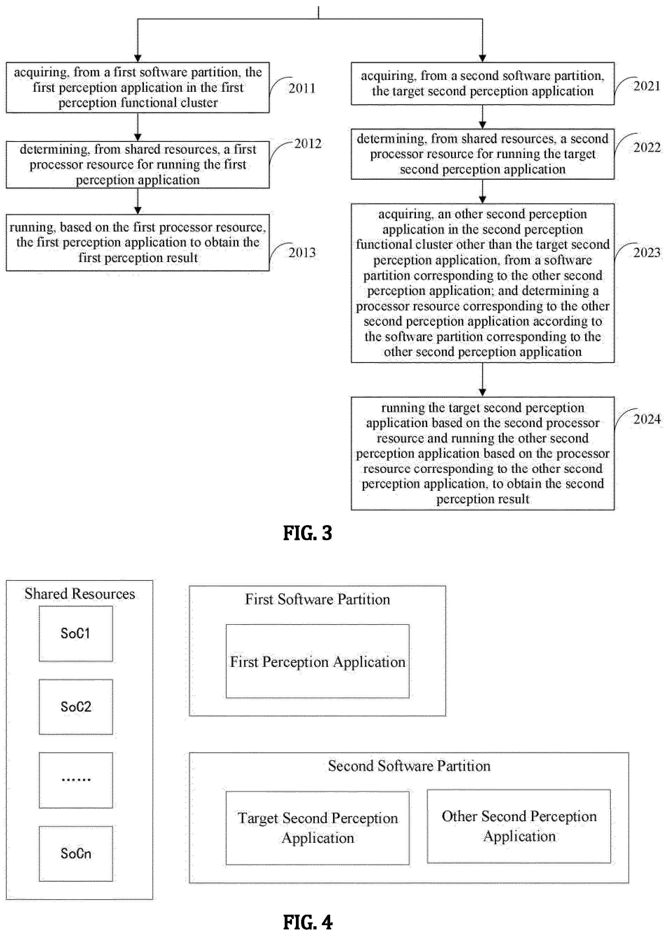

FIG. 3 is a schematic flowchart illustrating a redundant perception method according to another exemplary embodiment of the present disclosure.

In some optional embodiments, as shown in FIG. 3, step 201 of determining a first perception result based on a first perception application in a first perception functional cluster may specifically include the following steps:
Step 2011: acquiring, from a first software partition, the first perception application in the first perception functional cluster.

In some optional embodiments, the method of this embodiment of the present disclosure may be implemented on a platform supporting software partitioning, so that the isolation between the first perception application and the target second perception application may be implemented through software partitioning. A partition in which the first perception application is located is referred to as a first software partition. During perception, the first perception application in the first perception functional cluster may be acquired from the first software partition. The target second perception application is deployed in a software partition different from the first software partition.

Step 2012: determining, from shared resources, a first processor resource for running the first perception application.

The shared resources may include processor resources required to implement perception applications. The processor resources may include a central processing unit (CPU), a brain processing unit (BPU), a graphics processing unit (GPU), an artificial intelligence processor (APU), and other processor resources. The shared resources may be shared by the first perception functional cluster and the second perception functional cluster. It should be noted that, at a same time, a same processor resource may be used only for a perception application of one software partition. To be specific, at any time point, the first perception application and the target second perception application are executed through different processor resources to ensure isolation therebetween.

In some optional embodiments, the first processor resource for running the first perception application may be determined according to an idle status of each processor resource in the shared resources. For example, the shared resources may include multiple SoCs: SoC 1, SoC 2, ..., and SoC n, any idle chip among which may be determined as the first processor resource for running the first perception application. During actual application, the shared resources may also include one or more different processing modules (such as different processor cores) in a chip. That is, the shared resources may be a multiple SoCs with a coarser granularity, or may be a multiple processing modules with a finer granularity. A specific form and subdividable granularity of the shared resources are not limited.

Step 2013: running, based on the first processor resource, the first perception application to obtain the first perception result.

After the first processor resource for running the first perception application is determined, the first perception application may be run based on the first processor resource, to perform perception processing on sensor data from the first preset minimum viewing-angle range acquired by a first preset viewing-angle sensor (such as a camera and/or radar), to obtain a first perception result.

According to this embodiment, through deploying the first perception application in the first software partition, it is convenient for isolating the first perception application from the target second perception application through software partitioning. For example, the target second perception application may be deployed in a software partition different from the first software partition. In addition, the first perception application and the second perception application may share processor resources. In this way, hardware resource utilization efficiency may be improved.

In some optional embodiments, as shown in FIG. 3, step 202 of determining a second perception result based on a second perception application in a second perception functional cluster may include the following steps:

Step 2021: acquiring, from a second software partition, the target second perception application.

The second software partition is a software partition different from the first software partition. The target second perception application is deployed in the second software partition. During perception, the target second perception application may be acquired from the second software partition.

Step 2022: determining, from the shared resources, a second processor resource for running the target second perception application.

The second processor resource for running the target second perception application may be determined from idle resources in the shared resources according to occupancy of the shared resources. At this time, since the first processor resource has been allocated to the first perception application, the second processor resource and the first processor resource are different processor resources in the shared resources. However, the first processor resource and the second processor resource are sharable to all software partitions. During previous or subsequent running, any processor resource may be used for running a perception application in any software partition. In other words, each time a perception application is run, a resource may be allocated according to real-time occupancy of the shared resources.

Step 2023: acquiring, an other second perception application in the second perception functional cluster other than the target second perception application, from a software partition corresponding to the other second perception application; and determining a processor resource corresponding to the other second perception application according to the software partition corresponding to the other second perception application.

The processor resource corresponding to the other second perception application is any one of the first processor resource, the second processor resource, and a third processor resource.

In some optional embodiments, the other second perception application may include, for example, a rear-view perception application, a panoramic-view perception application, or a surround-view fisheye perception application. The target second perception application and the other second perception application may jointly implement a large-range perception around an ego vehicle.

In some optional embodiments, the other second perception application may be deployed in any software partition, for example, the first software partition or the second software partition, or a third software partition different from the first software partition and the second software partition. If there are a plurality of other second perception applications, the respective other second perception applications may be deployed in a plurality of software partitions in an arbitrary distribution manner. For example, a part of the other second perception applications are deployed in the first software partition, and an other part of the other second perception applications are deployed in the second software partition. A manner of deploying the other second perception applications in the partitions is not limited.

In some optional embodiments, during each perception process, different processor resources may be allocated to different software partitions. For example, if the other second perception application is deployed in the first software partition, the processor resource corresponding to the other second perception application is determined as the first processor resource. If the other second perception application is deployed in the second software partition, the processor resource corresponding to the other second perception application is determined as the second processor resource. If the other second perception application is deployed in the third software partition, the processor resource corresponding to the other second perception application is determined as the third processor resource in the shared resources.

Step 2024: running the target second perception application based on the second processor resource and running the other second perception application based on the processor resource corresponding to the other second perception application, to obtain the second perception result.

The second processor resource and the first processor resource are different resources in the shared resources. After the processor resources respectively corresponding to the target second perception application and the other second perception application are determined, the target second perception application may be run based on the second processor resource, and the other second perception application may be run based on the processor resource corresponding to the other second perception application, to perform perception processing on sensor data of the input source of the second perception functional cluster to obtain a second perception result. It may be understood that there may be a data dependency relationship between the target second perception application and the other second perception application in the second perception functional cluster, and in this case, the target second perception application and the other second perception application may be run according to the corresponding data dependency relationship to implement accurate data flow propagation.

In some optional embodiments, FIG. 4 is a schematic diagram illustrating software partitions according to an exemplary embodiment of the present disclosure. As shown in FIG. 4, the other second perception application in the second perception functional cluster may be deployed in the second software partition.

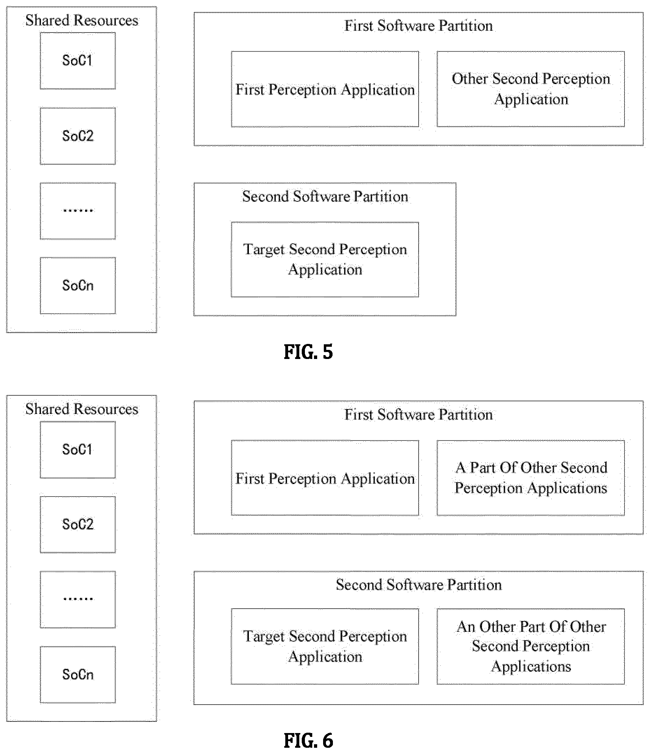

In some optional embodiments, FIG. 5 is a schematic diagram illustrating software partitions according to another exemplary embodiment of the present disclosure. As shown in FIG. 5, the other second perception application in the second perception functional cluster may be deployed in the first software partition.

In some optional embodiments, FIG. 6 is a schematic diagram illustrating software partitions according to still another exemplary embodiment of the present disclosure. As shown in FIG. 6, among the other second perception applications in the second perception functional cluster, a part of the other second perception applications may be deployed in the first software partition, and an other part of the other second perception applications may be deployed in the second software partition.

According to this embodiment, the target second perception application is deployed in the second software partition and is isolated from the first software partition in which the first perception application is located; and different processor resources are allocated to perception applications in different software partitions during perception, so that the acquisition of the first minimum perception result and the acquisition of the second minimum perception result are isolated from each other without mutual influence, thus effectively implementing minimum perception redundancy while the second software partition and the first software partition may share resources to improve resource utilization efficiency.

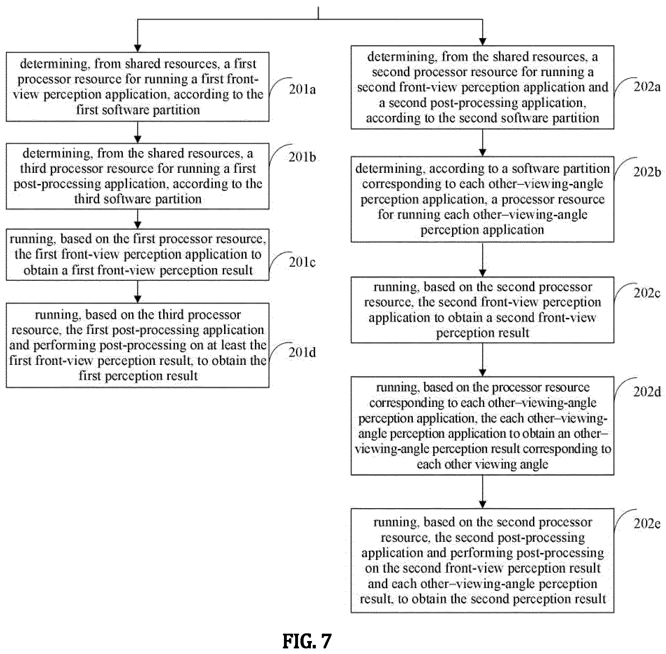

FIG. 7 is a schematic flowchart illustrating a redundant perception method according to still yet another exemplary embodiment of the present disclosure.

In some optional embodiments, the first perception application may include a first front-view perception application and a first post-processing application. The second perception application may include a second front-view perception application, at least one other-viewing-angle perception application, and a second post-processing application. The first front-view perception application may correspond to the first software partition. The second front-view perception application and the second post-processing application may correspond to the second software partition. The first post-processing application may correspond to the third software partition. Any one of the at least one other-viewing-angle perception application may correspond to any one of the first software partition, the second software partition, the third software partition, and a fourth software partition.

The first front-view perception application may be configured for performing perception processing on sensor data (such as an image and/or radar point cloud data) within the first preset minimum viewing-angle range to obtain a first front-view perception result. The first front-view perception result may include object information perceived in sensor data within a front-view viewing-angle range, for example, a bounding box of each object in the image, an object type corresponding to the bounding box, or a semantic segmentation result. The first post-processing application may be configured for performing post-processing on the first front-view perception result to obtain a first perception result. The post-processing may include dynamic perception post-processing, static fusion post-processing, and the like. For example, post-processing is performed based on the object information of each object included in the first front-view perception result to obtain status information of a dynamic object, status information of a static object, and the like. The second front-view perception application may be configured for performing perception processing on sensor data from the second preset minimum viewing-angle range to obtain a second front-view perception result. The other-viewing-angle perception application may be configured for performing perception processing on sensor data within a range corresponding to the other viewing angle to obtain an other-viewing-angle perception result. The second post-processing application may be configured for performing fusion and post-processing on perception results for the respective viewing angles to obtain a large-range perception result as a second perception result; or may further perform dynamic perception post-processing and static fusion post-processing on objects within a large range to obtain status information of a dynamic object and status information of a static object.

In some optional embodiments, the second front-view perception application and the second post-processing application may be determined as target second perception applications and be isolated from the first perception application. The first front-view perception application is deployed in the first software partition, the second front-view perception application and the second post-processing application are deployed in the second software partition, and the first post-processing application is deployed in the third software partition. Any one of the at least one other-viewing-angle perception application may be deployed in any software partition, for example, may be deployed in the first software partition, the second software partition, or the third software partition, or may be deployed in an additional fourth software partition.

In some optional embodiments, as shown in FIG. 7, step 201 of determining a first perception result based on a first perception application in a first perception functional cluster may include the following steps:
Step 201a: determining, according to the first software partition, a first processor resource for running the first front-view perception application, from shared resources.
Step 201b: determining, from the shared resources, a third processor resource for running the first post-processing application, according to the third software partition.

It should be noted that there is no sequential order for step 201a and step 201b.

Step 201c: running, based on the first processor resource, the first front-view perception application to obtain a first front-view perception result.

Step 201d: running, based on the third processor resource, the first post-processing application and performing post-processing on at least the first front-view perception result, to obtain the first perception result.

Resource allocation and running in step 201a to step 201d described above are similar to those in the foregoing embodiment, and are not repeated herein.

In some optional embodiments, step 202 of determining a second perception result based on a second perception application in a second perception functional cluster may include the following steps:

Step 202a: determining, from the shared resources, a second processor resource for running the second front-view perception application and the second post-processing application, according to the second software partition.

Step 202b: determining, according to a software partition corresponding to each other-viewing-angle perception application, a processor resource for running each other-viewing-angle perception application.

It should be noted that there may be no sequential order for step 202a and step 202b.

Step 202c: running, based on the second processor resource, the second front-view perception application to obtain a second front-view perception result.

Step 202d: running, based on the processor resource corresponding to each other-viewing-angle perception application, the each other-viewing-angle perception application to obtain an other-viewing-angle perception result corresponding to each other viewing angle.

It should be noted that there may be no sequential order for step 202c and step 202d.

Step 202e: running, based on the second processor resource, the second post-processing application and performing post-processing on at least the second front-view perception result and each other-viewing-angle perception result, to obtain the second perception result.

Resource allocation and application running in step 202a to step 202e described above are similar to those in the foregoing embodiment, and are not repeated herein.

According to this embodiment, a first front-view perception application, a first post-processing application, and a target second perception application (which may include a second front-view perception application and a second post-processing application) are respectively deployed in different software partitions, to help establish a data dependency relationship between a first perception functional cluster and a second perception functional cluster. For example, an output result of the second front-view perception application is transmitted to the first post-processing application, an output result of the first front-view perception application is transmitted to the second post-processing application, and a first perception result is transmitted to the second post-processing application. In this way, perception pathways may be increased without increasing sensor costs. For example, when malfunctions occur in the second post-processing application and the first front-view perception application, post-processing may be performed on the second front-view perception result through the first post-processing application to obtain a minimum perception result. Similarly, when malfunctions occur in the second front-view perception application and the first post-processing application, post-processing may be performed on the first front-view perception result through the second post-processing application to obtain a minimum perception result. Therefore, effectiveness and reliability of redundant perception may be further improved.

In some optional embodiments, alternatively, the second front-view perception application and the second post-processing application may be deployed in different software partitions. For example, the second front-view perception application is deployed in the second software partition, and the second post-processing application is deployed in the fourth software partition. In this way, the first front-view perception application, a first post-processing application, the second front-view perception application, and the second post-processing application may be isolated separately to further refine an isolation granularity, thereby further improving effectiveness and reliability of minimum redundant perception.

In some optional embodiments, step 201d of running, based on the third processor resource, the first post-processing application and performing post-processing on at least the first front-view perception result, to obtain the first perception result may include:
running, based on the third processor resource, the first post-processing application and performing fusion processing on the first front-view perception result and the second front-view perception result, to obtain the first perception result.

During perception, both the first front-view perception result and the second front-view perception result may be transmitted to the third processor resource, so that the third processor resource may run the first post-processing application, and perform fusion processing on the first front-view perception result and the second front-view perception result to obtain the first perception result. A specific fusion manner is not limited. For example, if the second front-view perception result covers a relatively large front-view viewing-angle range, and include objects not perceived in the first front-view perception result, objects from the second front-view perception result may be integrated through the first post-processing application to obtain a more effective first perception result.

Step 202e of running, based on the second processor resource, the second post-processing application and performing post-processing on at least the second front-view perception result and the other-viewing-angle perception result corresponding to each other viewing angle to obtain the second perception result may include:
running, based on the second processor resource, the second post-processing application and performing post-processing on the first front-view perception result, the second front-view perception result, and the other-viewing-angle perception result corresponding to each other viewing-angle to obtain the second perception result.

By transmitting the first front-view perception result to the second processor resource to involve in the obtaining of the second perception result, effectiveness of the second perception result may be further improved.

According to this embodiment, through involving the first front-view perception result in determining the second perception result and involving the second front-view perception result in determining the first perception result, not only effectiveness and reliability of the first perception result and the second perception result may be improved, but also more redundant perception pathways may be provided for minimum redundant perception, thereby improving effectiveness and reliability of the minimum redundant perception.

In some optional embodiments, step 202e of running, based on the second processor resource, the second post-processing application and performing post-processing on at least the second front-view perception result and the other-viewing-angle perception result corresponding to each other viewing angle, to obtain the second perception result may include:
running, based on the second processor resource, the second post-processing application and performing post-processing on the first front-view perception result, the second front-view perception result, the other-viewing-angle perception result corresponding to each other viewing angle, and the first perception result to obtain the second perception result.

Through further involving the first perception result in determining the second perception result, reliability of the second perception result may be further improved.

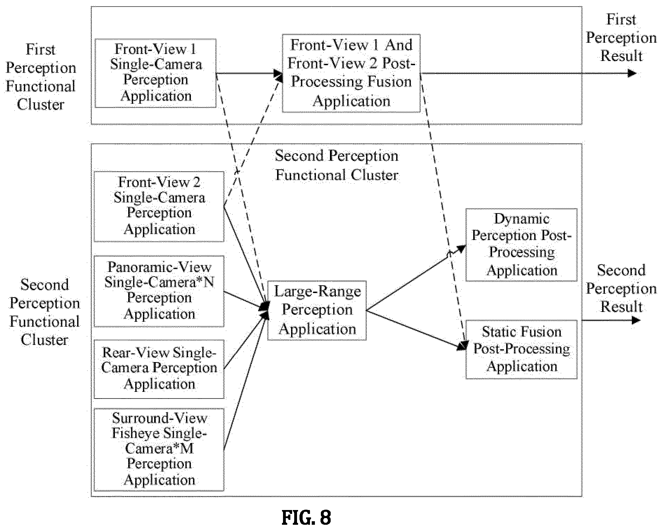

In some optional embodiments, FIG. 8 is a schematic exemplary diagram illustrating a redundant perception system according to an exemplary embodiment of the present disclosure. As shown in FIG. 8, the first perception functional cluster may include a front-view 1 single-camera perception application (that is, the first front-view perception application) and a front-view 1 and front-view 2 post-processing fusion application (that is, the first post-processing application). The second perception functional cluster may include a front-view 2 single-camera perception application (that is, the second front-view perception application), a panoramic-view single-camera*N perception application, a rear-view single-camera perception application, a surround-view fisheye single-camera*M perception application, a large-range perception application, a dynamic perception post-processing application, and a static fusion post-processing application. The front-view 1 single-camera and the front-view 2 single-camera refer to front-view single-cameras. The rear-view single-camera refer to a rear-view single-camera. The panoramic-view single-camera*N represents N single-cameras of different views, for implementing panoramic-view perception. The surround-view fisheye single-camera*M represents M fisheye cameras of different views, for implementing surround-view perception. A perception application of each view may acquire a perception result corresponding to the view. For example, the panoramic-view single-camera*N perception application may be configured for performing panoramic-view perception based on images captured by the N panoramic-view cameras, to obtain a panoramic-view perception result. The large-range perception application may perform fusion on perception results of all viewing-angle-specific perception applications to obtain a large-range perception result around the ego vehicle. The dynamic perception post-processing application may be configured for performing post-processing on a dynamic object in the large-range perception result to obtain status information of the dynamic object. The static fusion post-processing application may be configured for performing fusion post-processing on a static object in the large-range perception result to obtain status information of the static object, where the status information of the dynamic object and the status information of the static object in a large range are used as a second perception result. The front-view 1 and front-view 2 post-processing fusion application may be configured for performing fusion, dynamic perception post-processing, static fusion post-processing, and the like on a front-view 1 perception result and a front-view 2 perception result to obtain a first perception result.

It should be noted that, for the applications, when the applications are run by corresponding processor resources, the running of the applications may be controlled according to a data dependency relationship between the applications to effectively obtain the first perception result and the second perception result.

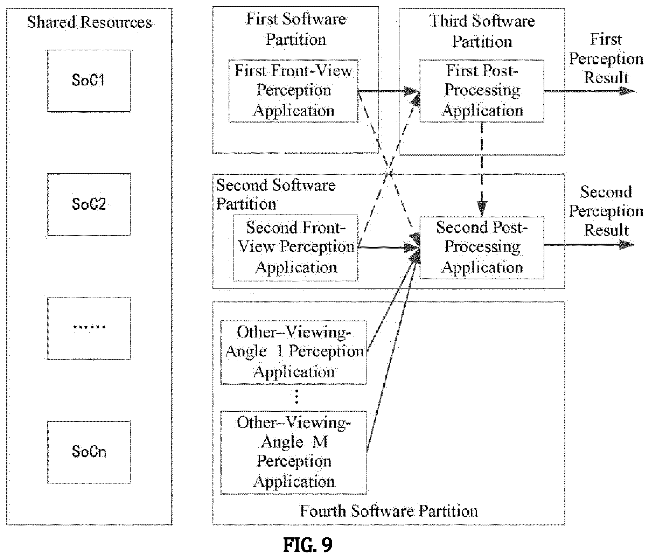

In some optional embodiments, FIG. 9 is a schematic diagram illustrating software partitions and perception logic according to yet another exemplary embodiment of the present disclosure. As shown in FIG. 9, in an example in which any one of the at least one other-viewing-angle perception application corresponds to the fourth software partition, the first processor resource may be, for example, the SoC 1 in the shared resources, the third processor resource may be, for example, the SoC 2 in the shared resources, the second processor resource may be, for example, the SoC 3, and the processor resource corresponding to the other-viewing-angle perception application may be, for example, the SoC 4. An arrow in the figure indicates a direction of a data flow during perception. A dashed line arrow indicates an optional setting, which may be specifically set according to an actual requirement. For example, the first front-view perception result obtained through running of the first front-view perception application may be transmitted to the second post-processing application to be involved in post-processing of large-range perception to obtain a second perception result. The second front-view perception result obtained through running of the second front-view perception application may be transmitted to the first post-processing application for fusion and post-processing with the first front-view perception result to obtain a first perception result. The first perception result obtained through running of the first post-processing application may be further transmitted to the second post-processing application to be involved in post-processing of large-range perception.

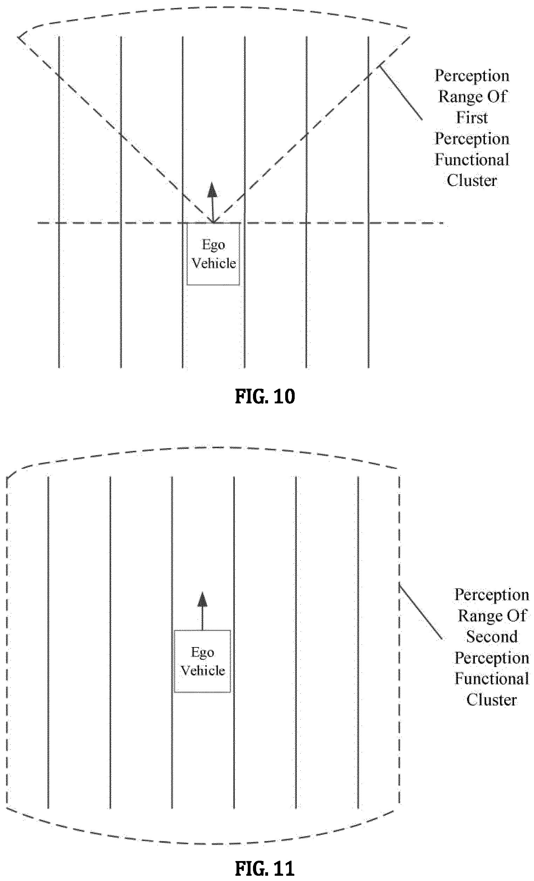

In some optional embodiments, FIG. 10 is a schematic diagram illustrating a perception range of a first perception functional cluster according to an exemplary embodiment of the present disclosure. FIG. 11 is a schematic diagram illustrating a perception range of a second perception functional cluster according to an exemplary embodiment of the present disclosure. As shown in FIG. 10, a perception range of the first perception functional cluster is an area within a certain range of a front-view viewing angle of the ego vehicle. As shown in FIG. 11, a perception range of the second perception functional cluster is an area within a large range around the ego vehicle.

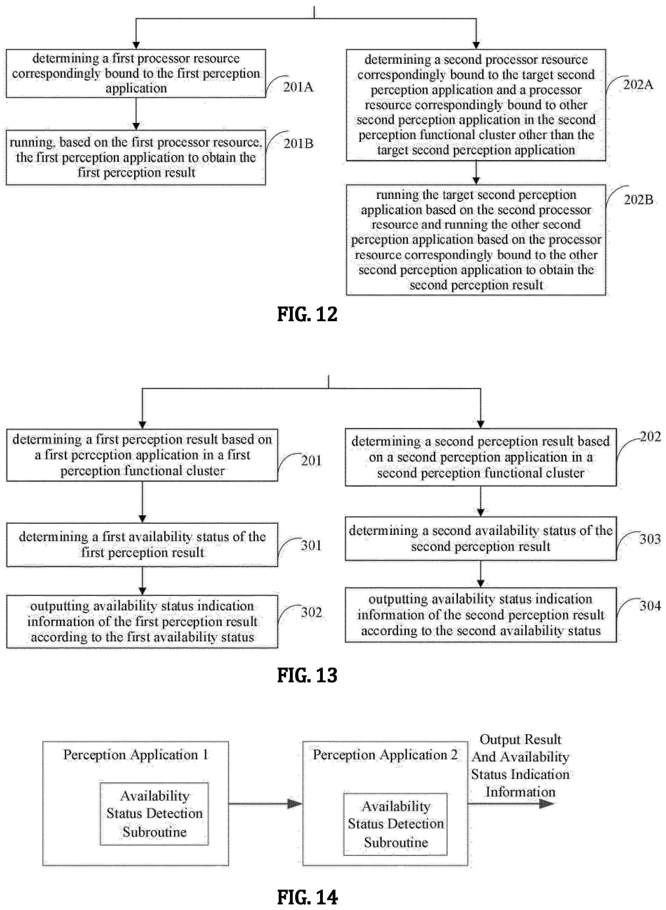

FIG. 12 is a schematic flowchart illustrating a redundant perception method according to yet another exemplary embodiment of the present disclosure.

In some optional embodiments, as shown in FIG. 12, step 201 of determining a first perception result based on a first perception application in a first perception functional cluster may include the following steps:
Step 201A: determining a first processor resource correspondingly bound to the first perception application.

Each perception application may be bound to a processor resource in advance, that is, a binding relationship (or a correspondence) between the perception application and the processor resource may be established in advance. For each time of running, the same perception application is run by the processor resource corresponding to the perception application to implement isolation between the first perception application and the target second perception application through hardware isolation. Therefore, the first processor resource correspondingly bound to the first perception application may be determined according to the binding relationship between the perception application and the processor resource.

Step 201B: running, based on the first processor resource, the first perception application to obtain the first perception result.

According to this embodiment, perception applications being bound to processor resources facilitates isolation between the first perception application and the target second perception application through hardware isolation, thereby improving resource utilization efficiency while ensuring minimum redundant perception.

In some optional embodiments, as shown in FIG. 12, step 202 of determining a second perception result based on a second perception application in a second perception functional cluster may include the following steps:

Step 202A: determining a second processor resource correspondingly bound to the target second perception application and a processor resource correspondingly bound to an other second perception application in the second perception functional cluster other than the target second perception application.

Step 202B: running the target second perception application based on the second processor resource and running the other second perception application based on the processor resource correspondingly bound to the other second perception application to obtain the second perception result.

The second processor resource and the first processor resource are different resources. For example, the second processor resource and the first processor resource may be different ECUs, or may be different processor resources on a same SoC.

Determining of binding resources and running of applications in step 202A and step 202B described above are similar to those in the foregoing embodiment, and are not repeated herein.

According to this embodiment, the target second perception application is correspondingly bound to the second processor resource, and the second processor resource is hardware-isolated from the first processor resource, so that hardware isolation between the target second perception application and the first perception application is implemented. In this way, during perception, the acquisition process of the first minimum perception result and the acquisition process of the second minimum perception result are isolated from each other and do not affect each other. On the basis of ensuring effectiveness and reliability of minimum redundant perception, the minimum redundant perception may be implemented through a same ECU or a controller of a similar architecture, thereby improving resource utilization efficiency.

In some optional embodiments, the isolation between the first perception application and the target second perception application may also be implemented through software partitioning combined with hardware isolation. For example, the first perception application and the target second perception application are deployed in different software partitions, and the different software partitions are bound to different processor resources. In this way, for each software partition, an application in the software partition is run by the bound processor resource to obtain the first perception result and the second perception result.

FIG. 13 is a schematic flowchart illustrating a redundant perception method according to still yet another exemplary embodiment of the present disclosure.

In some optional embodiments, as shown in FIG. 13, the method of this embodiment of the present disclosure may further include the following steps:

Step 301: determining a first availability status of the first perception result.

An availability status detection subroutine may be configured in the first perception application, for determining the first availability status of the first perception result. Alternatively, the first availability status of the first perception result may be determined in another manner, which is not limited in the embodiments of the present disclosure.

Step 302: outputting availability status indication information of the first perception result according to the first availability status.

The availability status indication information may be represented in any implementable manner. For example, the availability status indication information may be represented by a status flag bit, for example, 1 indicating "available" and 0 indicating "unavailable", or 0 indicating "available" and 1 indicating "unavailable".

Step 303: determining a second availability status of the second perception result.

Step 304: outputting availability status indication information of the second perception result according to the second availability status.

The second availability status is similar to the first availability status and is not described in detail herein.

In some optional embodiments, there may be no sequential order for step 301 to step 302 and step 303 to step 304. For example, there may be no sequential order when there is no dependency relationship between the first perception result and the second perception result.

According to this embodiment, an availability status detection subroutine may be configured in the perception application, for determining an availability status of a perception result, thus helping provide effective availability status indication information for planning and control of vehicle driving and avoid an adverse impact of an unavailable perception result on the planning of the driving, thereby further improving safety of vehicle driving.

In some optional embodiments, FIG. 14 is a schematic diagram illustrating a principle for determining an availability status of a perception result according to an exemplary embodiment of the present disclosure. As shown in FIG. 14, an availability status detection subroutine may be configured in a perception application, for detecting an availability status of a perception result. For example, an availability status detection subroutine in a perception application 1 is configured for detecting an availability status of upstream data of the perception application 1, and an availability status detection subroutine in a perception application 2 is configured for detecting an availability status of an output result of the perception application 1. The availability status detection subroutine may output availability status indication information. Running of the perception application 2 depends on the output result of the perception application 1. For example, the perception application 1 may be a first front-view perception application, and the perception application 2 may be a first post-processing application. For another example, the perception application 1 may be either of a second front-view perception application and an other-viewing-angle perception application, and the perception application 2 may be a second post-processing application.

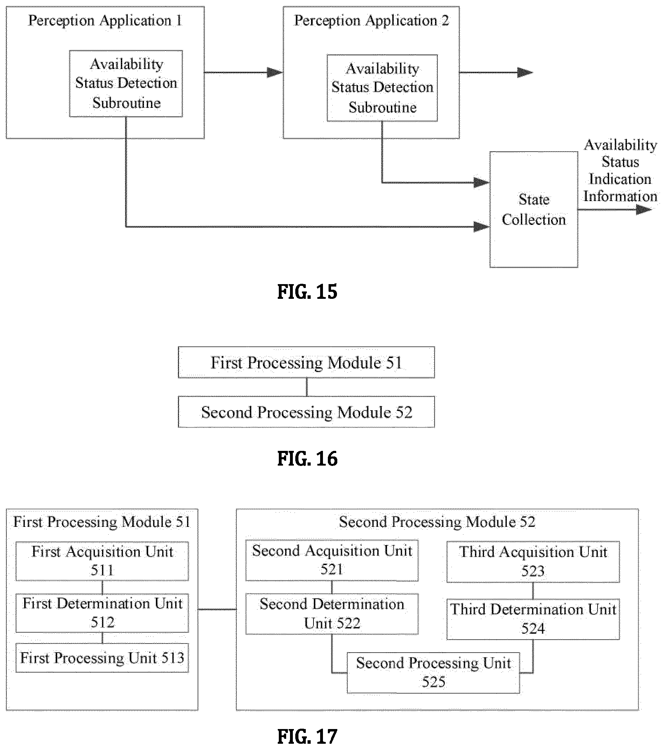

In some optional embodiments, FIG. 15 is a schematic diagram illustrating a principle for determining an availability status of a perception result according to another exemplary embodiment of the present disclosure. As shown in FIG. 15, an availability status detection subroutine of each perception application may be configured for separately outputting availability status indication information. Through collecting, by a status collection module, the availability status indication information output by each perception application, availability status indication information of the first perception result or the second perception result may be output according to the availability status indication information of each perception application.

According to the method in this embodiment of the present disclosure, two perception functional clusters are configured, one of which (that is, the first perception functional cluster) is enabled to provide a perception result for only minimum environmental perception, while the other of which (that is, the second perception functional cluster) is enabled to provide a main environmental perception result (a large-range perception result) including the minimum environmental perception, where real-time perception information and perception ranges provided by different functional clusters may be determined according to a maximum driving speed of the vehicle, control performance of the vehicle, and the like in actual use. During perception, the two perception functional clusters operate simultaneously, providing in real time results including the minimum environmental perception. Isolation is implemented through software partitioning, so that a perception system may continue to provide minimum environmental perception through another perception functional cluster when a perception application in either one of the perception functional clusters fails or cannot continue to operate normally. For example, if the front-view 1 single-camera perception fails, the perception result provided by the second perception functional cluster may cover the minimum environmental perception; if a certain panoramic-view single-camera in the second perception functional cluster fails, both the first perception functional cluster and the second perception functional cluster may provide a minimum environmental perception function; and so on. Through software partitioning, hardware resources are not directly visible to the perception applications, and allocation and deployment of corresponding resources are isolated through the software partitioning, thereby effectively meeting the redundancy requirement of minimum environmental perception. By binding the first perception application and the target second perception application to different processors for running, the redundancy requirement of minimum environmental perception may be met through hardware isolation. Therefore, according to the method in this embodiment of the present disclosure, through combination of environmental perception channels, a redundant minimum environmental perception function may be implemented with relatively low costs while a primary perception function may be implemented, and driving safety and high scalability of software deployment may be improved. In addition, in this embodiment of the present disclosure, various sensor data flows may also be combined according to malfunction statuses of software and hardware such as sensors, so that performance is improved while ensuring a minimum perception function, and expanding a system safety boundary during execution of a minimum risk strategy, thereby further improving safety of vehicle driving.

The foregoing embodiments of the present disclosure may be implemented individually or in any combination without conflict, which may be specifically set according to an actual requirement and is not limited in the present disclosure.

Any one of the redundant perception methods provided in the embodiments of the present disclosure may be performed by any suitable device with a data processing capability, including but not limited to: a terminal device, a server, and the like. Alternatively, any one of the redundant perception methods provided in the embodiments of the present disclosure may be performed by a processor. For example, the processor performs, by calling corresponding instructions stored in a memory, any one of the redundant perception methods mentioned in the embodiments of the present disclosure. This is not repeated below.

### Exemplary Apparatus

FIG. 16 is a schematic diagram illustrating a structure of a redundant perception apparatus according to an exemplary embodiment of the present disclosure. The apparatus of this embodiment may be configured for implementing the corresponding redundant perception method embodiment of the present disclosure. The apparatus shown in FIG. 16 includes a first processing module 51 and a second processing module 52.

The first processing module 51 is configured for determining a first perception result based on a first perception application in a first perception functional cluster.

The first perception result includes a first minimum perception result, and the first minimum perception result is a perception result within a first preset minimum viewing-angle range.

The second processing module 52 is configured for determining a second perception result based on a second perception application in a second perception functional cluster.

The second perception result includes at least a second minimum perception result, and the second minimum perception result is a perception result within a second preset minimum viewing-angle range.

Software isolation and/or hardware isolation are implemented between the first perception application in the first perception functional cluster and at least a target second perception application, and the target second perception application represents a second perception application, for acquiring the second minimum perception result, in the second perception functional cluster.

FIG. 17 is a schematic diagram illustrating a structure of a redundant perception apparatus according to another exemplary embodiment of the present disclosure.

In some optional embodiments, as shown in FIG. 17, the first processing module 51 may include a first acquisition unit 511, a first determination unit 512, and a first processing unit 513.

The first acquisition unit 511 may be configured for acquiring, from a first software partition, the first perception application in the first perception functional cluster.

The first determination unit 512 may be configured for determining, from shared resources, a first processor resource for running the first perception application.

The first processing unit 513 may be configured for running, based on the first processor resource, the first perception application to obtain the first perception result.

In some optional embodiments, as shown in FIG. 17, the second processing module 52 may include a second acquisition unit 521, a second determination unit 522, a third acquisition unit 523, a third determination unit 524, and a second processing unit 525.

The second acquisition unit 521 may be configured for acquiring, from a second software partition, the target second perception application.

The second determination unit 522 may be configured for determining, from the shared resources, a second processor resource for running the target second perception application.

The third acquisition unit 523 may be configured for: acquiring, an other second perception application in the second perception functional cluster other than the target second perception application, from a software partition corresponding to the other second perception application.

The third determination unit 524 may be configured for determining a processor resource corresponding to the other second perception application according to the software partition corresponding to the other second perception application.

The processor resource corresponding to the other second perception application is any one of the first processor resource, the second processor resource, and a third processor resource.

The second processing unit 525 may be configured for running the target second perception application based on the second processor resource and running the other second perception application based on the processor resource corresponding to the other second perception application, to obtain the second perception result.

The second processor resource and the first processor resource are different resources in the shared resources.

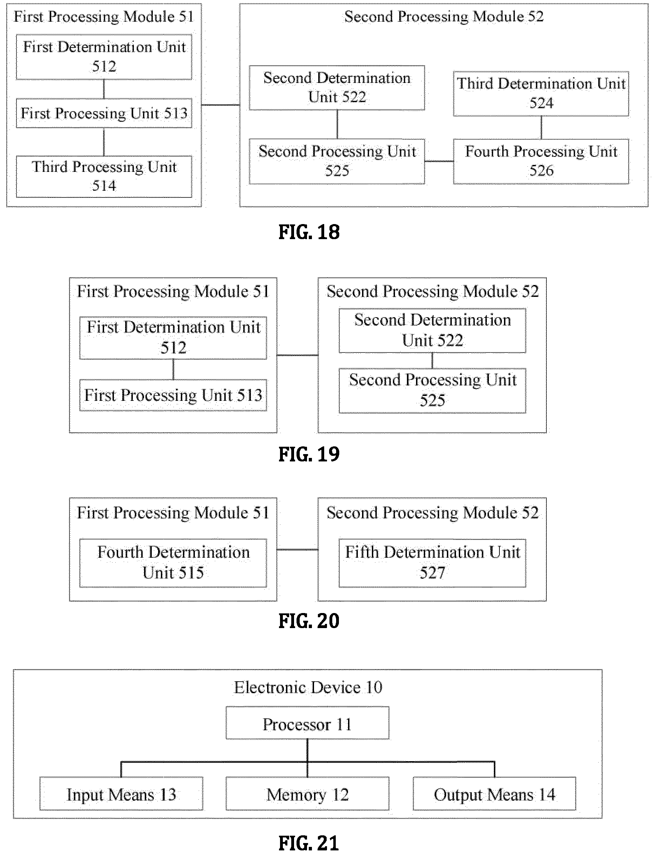

FIG. 18 is a schematic diagram illustrating a structure of a redundant perception apparatus according to still yet another exemplary embodiment of the present disclosure.

In some optional embodiments, the first perception application may include a first front-view perception application and a first post-processing application. The second perception application may include a second front-view perception application, at least one other-viewing-angle perception application, and a second post-processing application. The first front-view perception application may correspond to the first software partition. The second front-view perception application and the second post-processing application may correspond to the second software partition. The first post-processing application may correspond to the third software partition. Any one of the at least one other-viewing-angle perception application may correspond to any one of the first software partition, the second software partition, the third software partition, and a fourth software partition.

In some optional embodiments, as shown in FIG. 18, the first processing module 51 may include a first determination unit 512, a first processing unit 513, and a third processing unit 514.

The first determination unit 512 may be configured for determining, from shared resources, a first processor resource for running the first front-view perception application, according to the first software partition, and determining, from the shared resources, a third processor resource for running the first post-processing application, according to the third software partition.

The first processing unit 513 may be configured for running, based on the first processor resource, the first front-view perception application to obtain a first front-view perception result.

The third processing unit 514 may be configured for running, based on the third processor resource, the first post-processing application and performing post-processing on at least the first front-view perception result, to obtain the first perception result.

In some optional embodiments, the second processing module 52 may include a second determination unit 522, a third determination unit 524, a second processing unit 525, and a fourth processing unit 526.

The second determination unit 522 may be configured for determining, from the shared resources, a second processor resource for running the second front-view perception application and the second post-processing application, according to the second software partition.

The third determination unit 524 may be configured for determining, according to a software partition corresponding to each other-viewing-angle perception application, a processor resource for running each other-viewing-angle perception application.

The second processing unit 525 may be configured for running, based on the second processor resource, the second front-view perception application to obtain a second front-view perception result.

The fourth processing unit 526 may be configured for running, based on the processor resource corresponding to each other-viewing-angle perception application, the each other-viewing-angle perception application to obtain an other-viewing-angle perception result corresponding to each other viewing angle.

The second processing unit 525 may be further configured for running, based on the second processor resource, the second post-processing application, and performing post-processing on at least the second front-view perception result and the other-viewing-angle perception result corresponding to each other viewing angle, to obtain the second perception result.

In some optional embodiments, the third processing unit 514 may be specifically configured for running, based on the third processor resource, the first post-processing application and performing fusion processing on the first front-view perception result and the second front-view perception result, to obtain the first perception result.

The second processing unit 525 may be specifically configured for running, based on the second processor resource, the second post-processing application and performing post-processing on the first front-view perception result, the second front-view perception result, and the other-viewing-angle perception result corresponding to each other viewing angle, to obtain the second perception result.

In some optional embodiments, the second processing unit 525 may be specifically configured for running, based on the second processor resource, the second post-processing application, and performing post-processing on the first front-view perception result, the second front-view perception result, the other-viewing-angle perception result corresponding to each other viewing angle, and the first perception result to obtain the second perception result.

FIG. 19 is a schematic diagram illustrating a structure of a redundant perception apparatus according to yet another exemplary embodiment of the present disclosure.

In some optional embodiments, as shown in FIG. 19, the first processing module 51 may include a first determination unit 512 and a first processing unit 513.

The first determination unit 512 may be configured for determining a first processor resource correspondingly bound to the first perception application.

The first processing unit 513 may be configured for running, based on the first processor resource, the first perception application to obtain the first perception result.

In some optional embodiments, as shown in FIG. 19, the second processing module 52 may include a second determination unit 522 and a second processing unit 525.

The second determination unit 522 may be configured for determining a second processor resource correspondingly bound to the target second perception application and a processor resource correspondingly bound to other second perception application in the second perception functional cluster other than the target second perception application.

The second processing unit 525 may be configured for running the target second perception application based on the second processor resource, and running the other second perception application based on the processor resource correspondingly bound to the other second perception application to obtain the second perception result.

FIG. 20 is a schematic diagram illustrating a structure of a redundant perception apparatus according to still yet another exemplary embodiment of the present disclosure.

In some optional embodiments, as shown in FIG. 20, the first processing module 51 may include a fourth determination unit 515, which may be configured for determining a first availability status of the first perception result, and outputting availability status indication information of the first perception result according to the first availability status.

The second processing module 52 may include a fifth determination unit 527, which may be configured for determining a second availability status of the second perception result, and outputting availability status indication information of the second perception result according to the second availability status.

For beneficial technical effects corresponding to the exemplary embodiment of this apparatus, refer to the corresponding beneficial technical effects of the exemplary method section described above, which are not repeated herein.

### Exemplary Electronic Device

FIG. 21 is a diagram illustrating a structure of an electronic device according to an embodiment of the present disclosure. The electronic device includes at least one processor 11 and a memory 12.

The processor 11 may be a central processing unit (CPU) or another form of processing unit having a data processing capability and/or an instruction execution capability, and may control another component in the electronic device 10 to perform a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 11 may execute the one or more computer program instructions to implement the methods and/or other desired functions in the foregoing embodiments of the present disclosure.

In an example, the electronic device 10 may further include an input means 13 and an output means 14. The components are interconnected through a bus system and/or other forms of connection mechanisms (not shown).

The input means 13 may further include, for example, a keyboard or a mouse.

The output means 14 may output various information to the outside, and may include, for example, a display, a loudspeaker, a printer, and a communication network and a remote output means connected thereto.

Certainly, for simplicity, only some components in the electronic device 10 that are related to the present disclosure are shown in FIG. 21, and components such as a bus and an input/output interface are omitted. Besides, the electronic device 10 may further include any other appropriate components depending on specific applications.

### Exemplary Computer Program Product And Computer Readable Storage Medium

In addition to the foregoing methods and devices, the embodiments of the present disclosure may also provide a computer program product including computer program instructions that, when executed by a processor, cause the processor to implement the steps of the method according to the embodiments of the present disclosure that is described in the foregoing "Exemplary Method" section.

The computer program product may be program code, written with one or any combination of a plurality of programming languages, that is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when executed by a processor, cause the processor to perform the steps of the method according to the embodiments of the present disclosure that is described in the foregoing "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (EPROM) or a flash memory, an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiments of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A redundant perception method, **characterized by** comprising:
determining (201) a first perception result based on a first perception application in a first perception functional cluster, wherein the first perception result comprises a first minimum perception result, and the first minimum perception result is a perception result within a first preset minimum viewing-angle range; and
determining (202) a second perception result based on a second perception application in a second perception functional cluster, wherein the second perception result comprises at least a second minimum perception result, and the second minimum perception result is a perception result within a second preset minimum viewing-angle range,
wherein software isolation and/or hardware isolation are implemented between the first perception application in the first perception functional cluster and at least a target second perception application, and the target second perception application represents a second perception application, for acquiring the second minimum perception result, in the second perception functional cluster.

2. The method according to claim 1, wherein the determining (201) a first perception result based on a first perception application in a first perception functional cluster comprises:
acquiring (2011), from a first software partition, the first perception application in the first perception functional cluster;
determining (2012), from shared resources, a first processor resource for running the first perception application; and
running (2013), based on the first processor resource, the first perception application to obtain the first perception result.

3. The method according to claim 2, wherein the determining (202) a second perception result based on a second perception application in a second perception functional cluster comprises:
acquiring (2021), from a second software partition, the target second perception application;
determining (2022), from the shared resources, a second processor resource for running the target second perception application;
acquiring (2023), an other second perception application in the second perception functional cluster other than the target second perception application, from a software partition corresponding to the other second perception application; and determining a processor resource corresponding to the other second perception application according to the software partition corresponding to the other second perception application, wherein the processor resource corresponding to the other second perception application is any one of the first processor resource, the second processor resource, and a third processor resource; and
running (2024) the target second perception application based on the second processor resource and running the other second perception application based on the processor resource corresponding to the other second perception application, to obtain the second perception result,
wherein the second processor resource and the first processor resource are different resources in the shared resources.

4. The method according to claim 1, wherein the first perception application comprises a first front-view perception application and a first post-processing application; the second perception application comprises a second front-view perception application, at least one other-viewing-angle perception application, and a second post-processing application; the first front-view perception application corresponds to a first software partition; the second front-view perception application and the second post-processing application correspond to a second software partition; the first post-processing application corresponds to a third software partition; and any one of the at least one other-viewing-angle perception application corresponds to any one of the first software partition, the second software partition, the third software partition, and a fourth software partition;
the determining (201) a first perception result based on a first perception application in a first perception functional cluster comprises:
determining (201a), from shared resources, a first processor resource for running the first front-view perception application, according to the first software partition;
determining (201b), from the shared resources, a third processor resource for running the first post-processing application, according to the third software partition;
running (201c), based on the first processor resource, the first front-view perception application to obtain a first front-view perception result; and
running (201d), based on the third processor resource, the first post-processing application, and performing post-processing on at least the first front-view perception result, to obtain the first perception result; and
the determining (202) a second perception result based on a second perception application in a second perception functional cluster comprises:
determining (202a), from the shared resources, a second processor resource for running the second front-view perception application and the second post-processing application, according to the second software partition;
determining (202b), according to a software partition corresponding to each other-viewing-angle perception application, a processor resource for running each other-viewing-angle perception application;
running (202c), based on the second processor resource, the second front-view perception application to obtain a second front-view perception result;
running (202d), based on the processor resource corresponding to each other-viewing-angle perception application, the each other-viewing-angle perception application to obtain an other-viewing-angle perception result corresponding to each other viewing angle; and
running (202e), based on the second processor resource, the second post-processing application, and performing post-processing on at least the second front-view perception result and each other-viewing-angle perception result, to obtain the second perception result.

5. The method according to claim 4, wherein the running (201d), based on the third processor resource, the first post-processing application, and performing post-processing on at least the first front-view perception result, to obtain the first perception result comprises:
running, based on the third processor resource, the first post-processing application, and performing fusion processing on the first front-view perception result and the second front-view perception result, to obtain the first perception result; and
running (202e), based on the second processor resource, the second post-processing application, and performing post-processing on at least the second front-view perception result and the each other-viewing-angle perception result, to obtain the second perception result comprises:
running, based on the second processor resource, the second post-processing application, and performing post-processing on the first front-view perception result, the second front-view perception result, and the each other-viewing-angle perception result, to obtain the second perception result; or
running, based on the second processor resource, the second post-processing application, and performing post-processing on the first front-view perception result, the second front-view perception result, the each other-viewing-angle perception result, and the first perception result to obtain the second perception result.

6. The method according to claim 1, wherein the determining (201) a first perception result based on a first perception application in a first perception functional cluster comprises:
determining (201A) a first processor resource correspondingly bound to the first perception application; and
running (201B), based on the first processor resource, the first perception application to obtain the first perception result.

7. The method according to claim 6, wherein the determining (202) a second perception result based on a second perception application in a second perception functional cluster comprises:
determining (202A) a second processor resource correspondingly bound to the target second perception application and a processor resource correspondingly bound to an other second perception application in the second perception functional cluster other than the target second perception application; and
running (202B) the target second perception application based on the second processor resource, and running the other second perception application based on the processor resource correspondingly bound to the other second perception application to obtain the second perception result.

8. The method according to any one of claims 1 to 7, further comprising:
determining (301) a first availability status of the first perception result;
outputting (302) availability status indication information of the first perception result according to the first availability status;
determining (303) a second availability status of the second perception result; and
outputting (304) availability status indication information of the second perception result according to the second availability status.

9. A redundant perception apparatus, **characterized by** comprising:
a first processing module (51), configured for determining a first perception result based on a first perception application in a first perception functional cluster, wherein the first perception result comprises a first minimum perception result, and the first minimum perception result is a perception result within a first preset minimum viewing-angle range; and
a second processing module (52), configured for determining a second perception result based on a second perception application in a second perception functional cluster, wherein the second perception result comprises at least a second minimum perception result, and the second minimum perception result is a perception result within a second preset minimum viewing-angle range,
wherein software isolation and/or hardware isolation are implemented between the first perception application in the first perception functional cluster and at least a target second perception application, and the target second perception application represents a second perception application, for acquiring the second minimum perception result, in the second perception functional cluster.

10. The redundant perception apparatus according to claim 9, wherein the first processing module (51) comprises:
a first acquisition unit (511) configured for acquiring, from a first software partition, the first perception application in the first perception functional cluster;
a first determination unit (512) configured for determining, from shared resources, a first processor resource for running the first perception application; and
a first processing unit (513) configured for running, based on the first processor resource, the first perception application to obtain the first perception result.

11. The redundant perception apparatus according to claim 10, wherein the second processing module (52) comprises:
a second acquisition unit (521) configured for acquiring, from a second software partition, the target second perception application;
a second determination unit (522) configured for determining, from the shared resources, a second processor resource for running the target second perception application;
a third acquisition unit (523) configured for acquiring, an other second perception application in the second perception functional cluster other than the target second perception application, from a software partition corresponding to the other second perception application;
a third determination unit (524) configured for determining a processor resource corresponding to the other second perception application according to the software partition corresponding to the other second perception application, wherein the processor resource corresponding to the other second perception application is any one of the first processor resource, the second processor resource, and a third processor resource; and
a second processing unit (525) configured for running the target second perception application based on the second processor resource and running the other second perception application based on the processor resource corresponding to the other second perception application, to obtain the second perception result,
wherein the second processor resource and the first processor resource are different resources in the shared resources.

12. The redundant perception apparatus according to claim 9, wherein the first perception application comprises a first front-view perception application and a first post-processing application; the second perception application comprises a second front-view perception application, at least one other-viewing-angle perception application, and a second post-processing application; the first front-view perception application corresponds to a first software partition; the second front-view perception application and the second post-processing application correspond to a second software partition; the first post-processing application corresponds to a third software partition; and any one of the at least one other-viewing-angle perception application corresponds to any one of the first software partition, the second software partition, the third software partition, and a fourth software partition;
the first processing module (51) comprises:
a first determination unit (512) configured for: determining, from shared resources, a first processor resource for running the first front-view perception application, according to the first software partition; and determining, from the shared resources, a third processor resource for running the first post-processing application, according to the third software partition;
a first processing unit (513) configured for running, based on the first processor resource, the first front-view perception application to obtain a first front-view perception result; and
a third processing unit (514) configured for running, based on the third processor resource, the first post-processing application, and performing post-processing on at least the first front-view perception result, to obtain the first perception result; and
the second processing module (52) comprises:
a second determination unit (522) configured for determining, from the shared resources, a second processor resource for running the second front-view perception application and the second post-processing application, according to the second software partition;
a third determination unit (524) configured for determining, according to a software partition corresponding to each other-viewing-angle perception application, a processor resource for running each other-viewing-angle perception application;
a second processing unit (525) configured for running, based on the second processor resource, the second front-view perception application to obtain a second front-view perception result; and
a fourth processing unit (526) configured for running, based on the processor resource corresponding to each other-viewing-angle perception application, the each other-viewing-angle perception application to obtain an other-viewing-angle perception result corresponding to each other viewing angle,
wherein the second processing unit (525) is further configured for running, based on the second processor resource, the second post-processing application, and performing post-processing on at least the second front-view perception result and each other-viewing-angle perception result, to obtain the second perception result.

13. The redundant perception apparatus according to claim 9, wherein the first processing module (51) comprises:
a first determination unit (512) configured for determining a first processor resource correspondingly bound to the first perception application; and
a first processing unit (513) configured for running, based on the first processor resource, the first perception application to obtain the first perception result.

14. A non-transitory computer-readable storage medium, on which a computer program is stored, **characterized by** that the computer program, when executed by a processor, causes the processor to implement a redundant perception method according to any one of claims 1 to 8.

15. An electronic device, **characterized by** comprising:
a processor (11); and
a memory (12) configured for storing instructions executable by the processor, wherein
the processor (11) is configured for reading the executable instructions from the memory (12), and executing the instructions to implement a redundant perception method according to any one of claims 1 to 8.
